# EUROPÄISCHE PATENTSCHRIFT

(11) **EP 2 800 253 B1**
(45) Veröffentlichungstag und Bekanntmachung des Hinweises auf die Patenterteilung: **15.04.2020**
(21) Anmeldenummer: 14165728.8
(22) Anmeldetag: 24.04.2014
(51) Int. Cl.: H02K 13/00, H01R 43/06, H01R 43/02

(54) **Verfahren zur Herstellung eines Kollektors für eine Kommutierungseinrichtung**
Method of manufacturing a commutation device's collector
Procédé de fabrication d'un collecteur d'un dispositif de commutation

(30) Priorität: 30.04.2013 DE 102013207887
(43) Veröffentlichungstag der Anmeldung: 05.11.2014
(73) Patentinhaber: SEG Automotive Germany GmbH, 70499 Stuttgart (DE)
(72) Erfinder: Topf, Andreas, 31137 Hildesheim (DE); Ramsayer, Reiner, 71277 Rutesheim (DE); Winkler, Jens, 30900 Wedemark (DE); Zeadan, Jeihad, 4728 Kelmis (BE)
(74) Vertreter: Steinbauer, Florian

(56) Entgegenhaltungen:
- DE-A1-102011 083 901
- US-A- 2 668 923
- US-A- 4 933 587
- US-A1- 2002 046 864
- US-A1- 2012 292 080

## Beschreibung

Die Erfindung bezieht sich auf ein Verfahren zur Herstellung eines Kollektors für eine Kommutierungseinrichtung zur Stromübertragung auf einen Anker einer elektrischen Maschine.

### Stand der Technik

Bekannt sind elektrische Startermotoren in Startvorrichtungen, die zum Starten einer Brennkraftmaschine eingesetzt werden. Die Startermotoren sind beispielsweise als Gleichstrommotor mit Permanenterregung ausgeführt und weisen eine Kommutierungseinrichtung zur Stromübertragung und -wendung auf den im Startermotor rotierend gelagerten Anker auf. Die Kommutierungseinrichtung umfasst einen ankerseitigen Kommutatorläufer bzw. Kollektor und mehrere, an dem Kollektor anliegende Kohlebürsten, die jeweils von einer Bürstenfeder radial auf die Mantelfläche des Kollektors beaufschlagt sind. Über den Umfang verteilt weist der Kollektor mehrere Lamellen auf, an denen die Bürsten zur Übertragung des Stroms auf die Ankerwicklungen anliegen.

Bei einem in der DE 10 2007 058 911 A1 beschriebenen Startermotor weist der Kollektor Lamellen aus Kupfer auf, an die elektrisch die Ankerwicklungen angeschlossen sind, welche aus Aluminium bestehen. Die Enden der Aluminiumleiter weisen einen Leitungsabschnitt aus Kupfer in Form einer Kontakthülse auf, die an die Lamellen angeschlossen ist, um eine Korrosion an den Enden der Aluminiumleiter zu vermeiden.

Die DE 10 2011 083 901 A1 zeigt einen Kommutator einer elektrischen Maschine, bestehend aus einem Grundkörper und einer Vielzahl von an dem Grundkörper angeordneten Kommutatorlamellen, wobei der Grundkörper in axialer Richtung voneinander beabstandete Radialvorsprünge aufweist, die Seitenflächen der Kommutatorlamellen- im Längsschnitt gesehen - wenigstens bereichsweise abdecken, und über ein zwischen den Radialvorsprüngen angeordnetes Abdeckelement verfügt, das eine Anschlussfahne des Kommutators wenigstens teilweise abdeckt.

Die US 4 933 587 A zeigt einen Anker eines Motoranlasser-Gleichstrommotors umfassend eine Drehwelle und eine Aluminiumankerspule. Ein Kommutator ist auf einer Drehwelle angeordnet und weist eine Vielzahl von Kupferkommutatorsegmenten auf, die jeweils einen Hauptkörperabschnitt mit einer Gleitkontaktfläche und einen Verbindungsabschnitt mit einer Aluminiumverbindungsfläche aufweisen. Die Aluminiumankerspule ist elektrisch und mechanisch mit jeder der Aluminiumverbindungsflächen der Kommutatorsegmente verbunden, um eine elektrische und mechanische Verbindung dazwischen zu bilden. Die elektrische und mechanische Verbindung zwischen der Aluminiumverbindungsfläche und der Ankerspule ist mit einem elektrisch isolierenden Harz beschichtet.

Die US 2012/292080 A1 offenbart ein Verfahren zur Herstellung einer leitfähigen Verbundkomponente mit den Schritten: Bereitstellen von mindestens zwei Rohlingen aus metallischem Material, wobei die Rohlinge aus unterschiedlichen metallischen Materialien bestehen; Platzieren der Zuschnitte Kante an Kante oder in teilweise überlappender Beziehung zueinander; Festkörperverbinden der Zuschnitte durch Rollen oder Schweißen, um einen Verbundkörper zu bilden; Rollen des Verbundkörpers entlang der Verbindung über die gesamte Breite des Verbundkörpers, um dessen Dicke zu reduzieren und den gewalzten Verbundkörper über die Verbindung zu schneiden, um mindestens zwei leitfähige Verbundkomponenten herzustellen, die jeweils die metallischen Materialien der mindestens zwei Rohlinge umfassen und eine Verbindung zwischen den mindestens zwei unterschiedlichen metallischen Materialien aufweisen. Eine zusammengesetzte leitfähige Komponente umfasst mindestens einen ersten Teil eines ersten metallischen Materials und mindestens einen zweiten Teil eines zweiten metallischen Materials, wobei das erste und das zweite metallische Material voneinander verschieden sind und durch das Verfahren hergestellt werden.

Die US 2 668 923 A zeigt einen Kommutator aufweisend einen zylindrischen Keramikkern und eine Vielzahl von gleichmäßig verteilten longitudinalen Balken aus hitzebeständigem, leitfähigem Material, die entlang einer Peripherie des Kerns angeordnet und mit diesem verbunden sind. Eine Vielzahl von Steigleitungen aus elektrisch leitfähigem Metall ist mit den Balken und dem Kern verbunden, um elektrischen Kontakt zu den Balken zu ermöglichen.

### Offenbarung der Erfindung

Der Erfindung liegt die Aufgabe zugrunde, einen Kollektor für eine Kommutierungseinrichtung mit einfachen Maßnahmen bei reduziertem Gewicht herzustellen.

Diese Aufgabe wird erfindungsgemäß mit den Merkmalen des Anspruches 1 gelöst. Die Unteransprüche geben zweckmäßige Weiterbildungen an.

Der nach dem erfindungsgemäßen Verfahren hergestellte Kollektor bzw. Kommutatorläufer ist Teil einer Kommutierungseinrichtung zur Stromübertragung auf einen Anker einer elektrischen Maschine. Bei der elektrischen Maschine handelt es sich beispielsweise um einen Startermotor für eine Startvorrichtung, über die eine Brennkraftmaschine gestartet werden kann. Die elektrische Maschine kann zum Beispiel als ein Gleichstrommotor mit Permanenterregung oder mit elektrischer Erregung ausgeführt sein. Die elektrische Maschine ist bevorzugt als Innenläufer-Elektromotor ausgebildet.

Der Kollektor ist mit der Rotorwelle der elektrischen Maschine verbunden. Über den Kollektor werden die Rotor- bzw. Ankerspulen im Anker bestromt. Der Kollektor weist über den Umfang eine Mehrzahl einzelner Lamellen auf, die jeweils elektrisch mit einer Ankerspule verbunden sind und an denen die federkraftbeaufschlagten Bürsten anliegen. Der Kollektor ist aus zwei verschiedenen Materialpaarungen aufgebaut und weist einen mit einer Bürste in Kontakt stehenden Kontaktabschnitt und einen mit einer Ankerwicklung verbundenen Verbindungsabschnitt auf, wobei der Kontaktabschnitt und der Verbindungsabschnitt aus unterschiedlichen Materialen bestehen. Jede Lamelle umfasst einen Kontaktabschnitt und einen Verbindungsabschnitt. Indem Kontaktabschnitt und Verbindungsabschnitt aus unterschiedlichen Materialien bestehen, ist eine Anpassung an unterschiedliche Erfordernisse möglich. Der Kontaktabschnitt kann an den Schleifkontakt mit den Bürsten angepasst werden. Für den Verbindungsabschnitt, welcher den elektrischen Kontakt zu der Ankerwicklung herstellt, kann ein leichteres Material gewählt werden, so dass insgesamt das Gewicht des Kollektors reduziert werden kann.

Gemäß einer vorteilhaften Ausführung weist das Material des Kontaktabschnitts eine gleich große oder höhere elektrische Leitfähigkeit auf als das Material des Verbindungsabschnitts. Zusätzlich oder alternativ kann das Material des Kontaktabschnitts eine größere Dichte aufweisen als das Material des Verbindungsabschnitts. Des Weiteren ist es möglich, dass das Material des Kontaktabschnitts eine größere Härte aufweist als das Material des Verbindungsabschnitts.

Gemäß bevorzugter Ausführung enthält der Kontaktabschnitt Kupfer oder Messing und der Verbindungsabschnitt Aluminium oder Zink. Der Kupfer- bzw. Messingabschnitt befindet sich somit auf der außen liegenden Seite der Lauffläche am Kollektor und dient zur Kontaktierung mit den stromleitenden Bürsten. Der Aluminium- bzw. Zinkabschnitt ist mit dem Kupfer- bzw. Messingabschnitt elektrisch verbunden und steht außerdem elektrisch mit einer Ankerwicklung in Kontakt. Somit dient der Aluminium- bzw. Zinkabschnitt als elektrischer Leiter zwischen dem Kupfer- bzw. Messingabschnitt und den Ankerwicklungen.

Die Abschnitte aus den verschiedenen Materialien sind zu einzelnen Kommutatorlamellen mit je einem Kontaktabschnitt und einem Verbindungsabschnitt unterteilt, die sich jeweils in Achsrichtung erstrecken, wobei über den Umfang eine Mehrzahl derartiger Lamellen am Kollektor angeordnet ist. Die Lamellen sind jeweils elektrisch mit einer Ankerspule verbunden. Im Bereich der Laufbahn der Bürsten können die Kommutatorlamellen aus Kupfer bzw. Messing bestehen, so dass insoweit ein bewährter Kontakt zwischen den Bürsten und den Lamellen gegeben ist. Der Aluminium- bzw. Zinkabschnitt hat dagegen den Vorteil, dass es sich um ein spezifisch leichteres Material als Kupfer oder Messing handelt, wodurch die Masse und das Trägheitsmoment des Kollektors reduziert sind, was mit einer Verringerung von Fliehkräften bzw. einer Erhöhung der Beschleunigung einhergeht.

Der Aluminium- bzw. Zinkabschnitt kann entweder vollständig aus Aluminium bzw. Zink bestehen oder einen Anteil an Aluminium bzw. Zink aufweisen. In entsprechender Weise kann der Kupfer- bzw. Messingabschnitt entweder vollständig aus Kupfer bzw. Messing bestehen oder einen Kupfer- bzw. Messinganteil aufweisen. Der Anteil des jeweiligen Materials Aluminium bzw. Zink einerseits und Kupfer bzw. Messing andererseits beträgt vorteilhafterweise mindestens 50 %.

Bei dem erfindungsgemäßen Verfahren zur Herstellung des Kollektors werden ein Kontaktabschnitt und ein Verbindungsabschnitt durch Rührreibschweißen unter Einsatz eines Rührreibwerkzeugs miteinander verbunden. Die beiden Abschnitte werden in eine aneinandergrenzende Lage gebracht, wobei der aneinandergrenzende Bereich den Verbindungsbereich bildet, in welchem die Reibpartner mittels Rührreibschweißen verbunden werden.

Das Rührreibschweißen stellt eine Variante des Reibschweißens dar, bei dem es sich um eine Schweißverbindung zwischen festen Stoffen unterhalb des Schmelzpunktes der Fügepartner handelt. Beim Rührreibschweißen wird die für das Schweißen erforderliche Wärme mithilfe eines Rührreibwerkzeugs erzeugt, das im Verbindungsbereich mit den Fügepartnern in Kontakt steht und eine Rotationsbewegung ausführt. Durch die Reibung zwischen dem rotierenden Rührreibwerkzeug und den Fügepartnern werden die Werkstoffe in der Füge- bzw. Verbindungszone erwärmt, durchgeknetet und miteinander verbunden. Der Wärmeeintrag wird beispielsweise in der Weise erzeugt, dass der Werkstoff der Fügepartner lediglich plastifiziert, nicht jedoch geschmolzen wird. Die Verbindung weist dennoch die Qualität einer Schweißverbindung auf.

Zweckmäßigerweise berühren die Fügepartner, also der Kontaktabschnitt und der Verbindungsabschnitt, einander, während das Rührreibwerkzeug in einer Vorschubbewegung über den Verbindungsbereich geführt wird und durch die Rotation des Rührreibwerkzeugs sowie den Kontakt mit dem Verbindungsbereich die für das Reibschweißen erforderliche Wärme erzeugt wird. Es kommen sowohl Ausführungen in Betracht, bei denen das Rührreibwerkzeug in seiner Position fix ist und die Fügepartner unter dem rotierenden Reibwerkzeug bewegt werden, als auch Ausführungen, bei denen die Fügepartner in ihrer Position fix sind und das Rührreibwerkzeug entlang des Verbindungsbereiches bewegt wird. Des Weiteren sind auch Mischformen möglich, bei denen sowohl das Rührreibwerkzeug als auch die Fügepartner eine Vorschubbewegung während des Reibschweißvorganges ausführen. Die Bewegung des Rührreibwerkzeugs entlang des Verbindungsbereichs erfolgt zusätzlich zur Eigenrotationsbewegung. Die Rotationsachse des Rührreibwerkzeugs liegt senkrecht zur Oberfläche des Verbindungsbereichs oder kann in einem Winkel angestellt sein.

Zweckmäßigerweise steht das Rührreibwerkzeug im Verbindungsbereich in Reibkontakt mit beiden Fügepartnern. Möglich ist aber auch ein Reibschweißvorgang, bei dem das Rührreibwerkzeug nur an der Kontaktfläche eines Fügepartners anliegt und Wärme erzeugt, um die Schweißverbindung herzustellen. Der zweite Fügepartner steht entweder bereits zu Beginn des Reibschweißvorgangs in Kontakt mit dem zweiten Fügepartner oder wird nach dem Wärmeeintrag in Kontakt mit dem zweiten Fügepartner gebracht.

Erfindungsgemäß sind sowohl der Kontaktabschnitt als auch der Verbindungsabschnitt jeweils rotationssymmetrisch ausgebildet. Die Verbindung erfolgt entlang eines kreisförmigen Verbindungsbereichs zwischen den Fügepartnern. Erfindungsgemäß liegen die Fügepartner stirnseitig aneinander und weisen somit eine gemeinsame Stirnseite auf, welche den Verbindungsbereich bildet. Das Rührreibwerkzeug wird während seiner Eigenrotation in Umfangsrichtung über den Verbindungsbereich, der Kreisform besitzt, geführt bzw. die beiden Fügepartner werden um ihre gemeinsame Längsachse verdreht, so dass eine Relativdrehung zwischen dem Rührreibwerkzeug und den Fügepartnern entsteht. Während des Reibschweißvorganges werden die Fügepartner vorteilhafterweise axial aneinandergepresst.

Der kreisförmige Verbindungsbereich kann grundsätzlich auch an weiteren Stellen der Fügepartner vorliegen. So ist es beispielsweise möglich, einen Fügepartner, z.B. den Verbindungsabschnitt, hülsenförmig mit an einer Stirnseite radial erweitertem Kragen auszuführen, wobei der ebenfalls hülsenförmig ausgeführte Kontaktabschnitt auf den Hülsenabschnitt des Aluminium- bzw. Zinkteils aufgeschoben wird und die Stirnseite des Kupfer- bzw. Messingteils mit dem Kragen des Aluminium- bzw. Zinkteils reibverschweißt wird.

Gemäß einem nicht beanspruchten Beispiel sind sowohl der Kontaktabschnitt als auch der Verbindungsabschnitt jeweils eben ausgebildet und werden entlang einer aneinandergrenzenden Kante, die den Verbindungsbereich bildet, im Wege des Rührreibschweißens miteinander verbunden. Die aneinandergrenzende Kante ist vorzugsweise geradlinig ausgeführt, wobei grundsätzlich auch gebogene Kanten in Betracht kommen. Auch im Falle ebener Fügepartner wird das Rührreibwerkzeug entlang des Verbindungsbereiches geführt bzw. es wird eine Relativbewegung zwischen den Fügepartnern und dem Rührreibwerkzeug entlang des Verbindungsbereichs erzeugt. Durch die Eigenrotation und den Kontakt des Rührreibwerkzeugs mit den Fügepartnern entsteht die für den Reibschweißvorgang erforderliche Wärme.

Die Kollektorlamellen werden vorteilhafterweise nach dem Verbinden des Kontaktabschnitts mit dem Verbindungsabschnitt durch axiales Auftrennen erzeugt. Es handelt sich hier um einen Vereinzelungsvorgang, bei dem entweder ein Verbund von Lamellen erzeugt wird, die jedoch über einen gemeinsamen Abschnitt zusammenhängen, oder nicht-zusammenhängende Einzellamellen durch Auftrennen hergestellt werden, die anschließend beispielsweise an einem Trägerteil zum Kollektor zusammengesetzt werden.

Im Falle von rotationssymmetrisch ausgeführten Fügepartnern erfolgt die Vereinzelung zu den Kollektorlammellen vorteilhafterweise unmittelbar im Anschluss an den Reibschweißvorgang. Bei eben aufgeführten Fügepartnern erfolgt das Auftrennen der Lamellen entweder ebenfalls unmittelbar nach dem Reibschweißvorgang oder, gemäß einer alternativen Ausführung, nach dem Umformen zu einem gebogenen Bauteil, das sich beispielsweise als Segment über einen Teilumfang erstreckt, wobei mehrere derartige Bauteile zum umlaufenden Kollektor zusammengesetzt werden.

Weitere Vorteile und zweckmäßige Ausführungen sind den weiteren Ansprüchen, der Figurenbeschreibung und den Zeichnungen zu entnehmen. Es zeigen:
- Fig. 1: eine Startvorrichtung für eine Brennkraftmaschine im Längsschnitt, mit einem elektrischen Startermotor, der mit einer Kommutierungseinrichtung versehen ist,
- Fig. 2: eine schematische Darstellung des Rührreibverschweißens zwischen einer Aluminiumhülse und einer Messinghülse für den Kollektor der Kommutierungseinrichtung,
- Fig. 3: eine Darstellung des Rührreibschweißvorgangs zum Verbinden eines ebenen Kupferteils mit einem ebenen Aluminiumteil,
- Fig. 4: das Bauteil gemäß Fig. 3 mit Kupfer- und Messingteil, mit Kollektorlamellen, die jedoch im Bereich des Kupferteils miteinander verbunden sind,
- Fig. 5: einen Schnitt durch einen Kollektor, der durch Umformen aus dem Bauteil gemäß Fig. 4 erzeugt wird,
- Fig. 6: eine ähnliche Darstellung wie Fig. 4, jedoch mit durchgehend ausgebildeten Einzellamellen,
- Fig. 7: einen Schnitt längs durch einen Kollektor mit Einzellamellen gemäß Fig. 6.

In den Figuren sind gleiche Bauteile mit gleichen Bezugszeichen versehen.

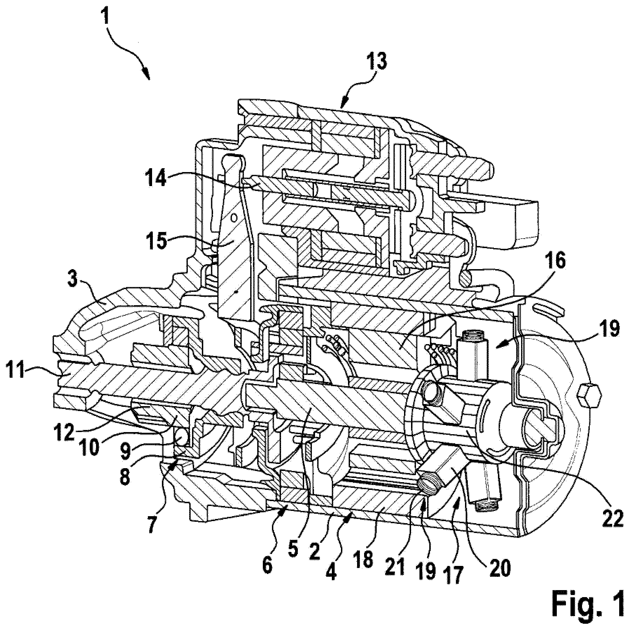

In Fig. 1 ist eine Startvorrichtung 1 für eine Brennkraftmaschine dargestellt, die in einem Gehäuse 2, welches einen vorne liegenden Lagerschild 3 aufweist, einen elektrischen Startermotor aufnimmt. Die Motorwelle 5 des Startermotors 4 treibt über ein Planetengetriebe 6 eine Antriebswelle 11 an, auf der ein Mitnehmer 8 einer Freilaufeinrichtung 7 axial verschieblich, jedoch in Drehrichtung mit der Antriebswelle 11 gekoppelt angeordnet ist. Der Mitnehmer 8 stützt sich über Stützrollen 9 an einem Rollenbund 10 ab, der einteilig mit einem Starterritzel 12 ausgebildet ist. Bei einer axialen Vorschubbewegung gelangt das Starterritzel 12 aus einer zurückgezogenen Außerbetriebsstellung in eine vorgerückte Eingriffsstellung mit dem Zahnkranz einer Brennkraftmaschine.

Die axiale Vorschubbewegung des Starterritzels 12 wird mithilfe eines elektromagnetischen Starterrelais 13 durchgeführt, das einen axial verstellbaren Hubanker 14 aufweist, welcher mit einem Gabelhebel gekoppelt ist. Bei einer axialen Stellbewegung des Hubankers 14 wird der am Gehäuse gelagerte Gabelhebel 15 verschwenkt, wodurch der Mitnehmer 8 einschließlich Starterritzel 12 in Achsrichtung verstellt wird.

Der elektrische Startermotor 4 ist als Innenläufermotor ausgebildet und weist einen drehfest mit der Motorwelle 5 verbundenen Anker 16 auf, welcher elektrisch erregbare Ankerspulen enthält. Die Spulen im Anker 16 werden über eine Kommutierungseinrichtung 17 bestromt. Das von den elektrischen Ankerspulen erzeugte elektromagnetische Feld interagiert mit dem Magnetfeld von Permanentmagneten 18, die an der Innenseite des den Anker umgreifenden Stators angeordnet sind.

Die Kommutierungseinrichtung 17 weist mehrere Feder-Bürste-Einheiten 19 auf, die jeweils gehäuseseitig eine Kohlebürste 20 und eine Bürstenfeder 21 umfassen, sowie einen ankerseitigen Kollektor 22. Die Kohlebürsten 20 werden von den Bürstenfedern 21 radial gegen die Mantelfläche des Kollektors 22 kraftbeaufschlagt. Kohlebürsten 20 und Bürstenfedern 21 sind zweckmäßigerweise in Bürstenhalterungen aufgenommen, die fest mit dem Gehäuse des Startermotors verbunden sind. Über den Umfang gleichmäßig verteilt sind insgesamt sechs Feder-Bürste-Einheiten 19 vorgesehen.

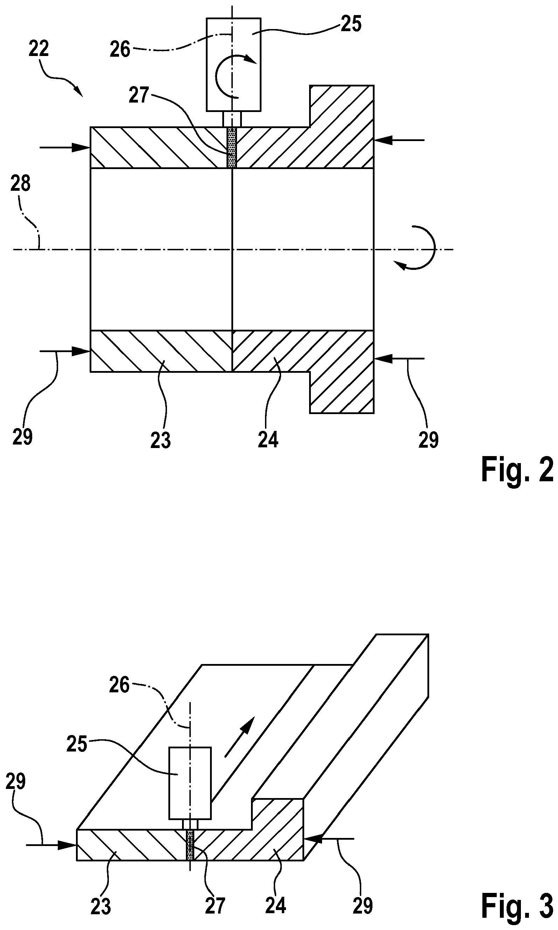

In Fig. 2 ist der Kollektor 22 während des Herstellungsprozesses dargestellt, bei dem ein hülsenförmigen Kupferabschnitt 23 stirnseitig mit einem hülsenförmigen Aluminiumabschnitt 24 verbunden wird. Die beiden hülsenförmigen Abschnitte 23 und 24 weisen den gleichen Innendurchmesser sowie den gleichen Außendurchmesser auf und liegen stirnseitig aneinander. Der Aluminiumabschnitt 24 besitzt an seiner dem Kupferabschnitt 23 abgewandten Stirnseite einen radial erweiterten Kragen, über den die Anbindung an die Ankerwicklungen des Motors erfolgt. Die Mantelfläche des Kupferabschnittes 23 bildet die Lauffläche, an der die Bürsten zur Stromübertragung auf Kontakt anliegen. Über den stirnseitigen Kontakt zwischen Kupferabschnitt 23 und Aluminiumabschnitt 24 wird der Strom auf die Ankerwicklungen weitergeleitet.

Die Verbindung im Bereich der aneinandergrenzenden Stirnseiten erfolgt im Wege des Rührreibschweißens. Hierzu wird ein Rührreibwerkzeug 25 eingesetzt, das sich radial an der Außenseite des Verbindungsbereichs 27 zwischen dem Kupferabschnitt 23 und dem Aluminiumabschnitt 24 befindet; der Verbindungsbereich 27 wird von den aneinanderliegenden Stirnseiten zwischen den Fügepartnern 23, 24 gebildet und weist somit Kreisform auf.

Das Rührreibwerkzeug 25 kann um seine Längsachse 26 rotieren. Die Stirnseite des Rührreibwerkzeugs 25 liegt an der äußeren Mantelfläche der Fügepartner 23, 24 in Höhe des Verbindungsbereichs 27 an. Durch die Rotation um die Längsachse 26 wird Wärme erzeugt, die zu einem Plastifizieren im Verbindungsbereich 27 führt, wodurch die Verschweißung hergestellt wird.

Zeitgleich mit der Rotation des Rührreibwerkzeugs 25 um seine Längsachse 26 werden der Kupferabschnitt 23 und der Aluminiumabschnitt 24 um ihre gemeinsame Längsachse 28 gedreht; währenddessen verharrt das Rührreibwerkzeug 25 bei gleichzeitiger Rotation um die Längsachse 26 in einer ortsfesten Position. Durch das Drehen der Fügepartner 23, 24 um die gemeinsame Längsachse 28 wird somit ein umlaufendes Verschweißen entlang des Verbindungsbereichs 27 erreicht.

Während des Rührreibschweißvorgangs werden die Fügepartner 23, 24, wie mit den Pfeilen 29 dargestellt, axial gegeneinander gedrückt.

Im Anschluss an den Reibschweißvorgang können Lamellen in den zusammengefügten Teile 23, 24 erzeugt werden. Dies erfolgt durch ein axiales Auftrennen in regelmäßigem Abstand über den Umfang gesehen. In Achsrichtung werden die zusammengefügten Teile 23, 24 über die gesamte axiale Länge des Kupferabschnittes 23 und im Bereich des Aluminiumabschnittes 24 bis an den radial erweiterten Kragen aufgetrennt.

In Fig. 3 ist ein nicht beanspruchtes Beispiel dargestellt, bei dem der Kupferabschnitt 23 und der Aluminiumabschnitt 24 jeweils als eben ausgeführtes Halbzeug vorliegen und Kante an Kante aneinanderliegen. Die Kante verläuft geradlinig und bildet den Verbindungsbereich 27, entlang dem die Verbindung im Wege des Rührreibschweißens erfolgt. Das Rührreibwerkzeug 25 rotiert im seine Längsachse 26 und wird entlang des Verbindungsbereiches 27 mit Kontakt zu diesem über die Fügepartner 23, 24 bewegt. Alternativ ist es auch möglich, das Rührreibwerkzeug 25 stationär zu halten bei gleichzeitiger Rotation um seine Längsachse 26 und die Fügepartner 23, 24 unter dem Rührreibwerkzeug 25 entlang zu bewegen. Der Kupferabschnitt 23 und der Aluminiumabschnitt 24 werden gemäß den Pfeilen 29 aneinandergepresst.

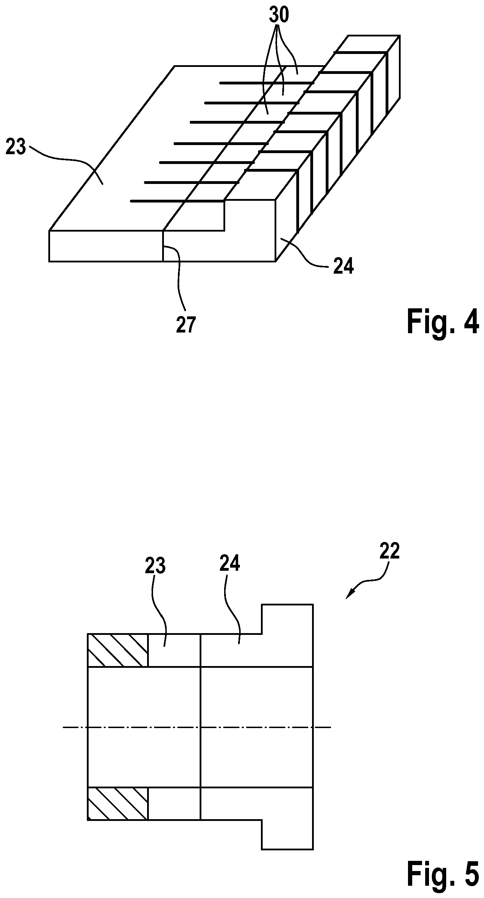

In Fig. 4 sind der Kupferabschnitt 23 und der Aluminiumabschnitt 24 als eben ausgeführte Bauteile gemäß Fig. 3, jedoch im verschweißten Zustand dargestellt. In die beiden Abschnitte 23, 24 sind Lamellen 30 durch Auftrennen in Achsrichtung eingebracht, wobei die Auftrennung quer zum geradlinigen Verbindungsbereich 27 erfolgt. Der Aluminiumabschnitt 24 wird vollständig durchtrennt, der Kupferabschnitt 23 nur zum Teil, so dass ein zusammenhängender Verbund von Einzellamellen 30 gebildet ist, die über den verbindenden Bereich des Kupferabschnittes 23 zusammenhängen. Nach dem Auftrennen und Erzeugen der Lamellen 30 wird der Verbund, bestehend aus Kupferabschnitt 23 und Aluminiumabschnitt 24 umgeformt und der ring- bzw. teilringförmige Kollektor 22 gebildet (Fig. 5).

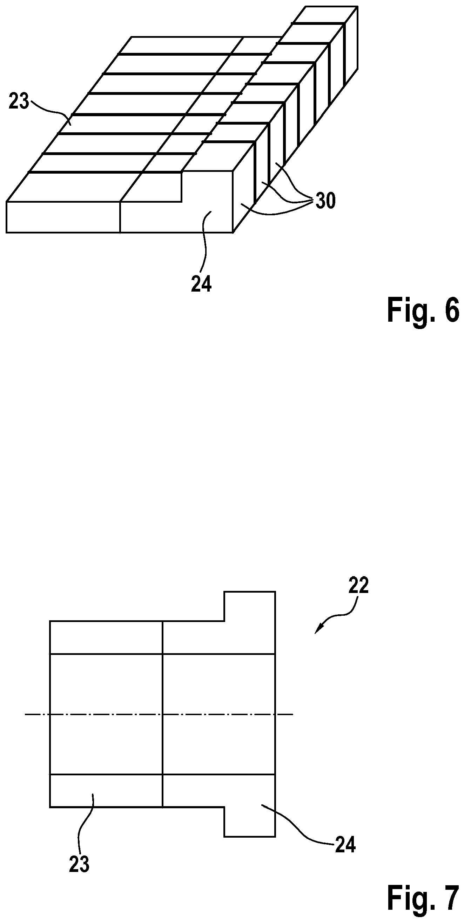

Fig. 6 und 7 entsprechen im Wesentlichen den Figuren 4 und 5, jedoch mit dem Unterschied, dass die Lamellen 30 den Verbund von Kupferabschnitt 23 und Aluminiumabschnitt 24 vollständig durchtrennen, so dass Einzellamellen gebildet sind, die nicht mehr zusammenhängen. Um den Kollektor 22 gemäß Fig. 7 herzustellen, werden die Lamellen 30 an einem Trägerbauteil platziert.

## Patentansprüche

1. Verfahren zur Herstellung eines Kollektors (22) für eine Kommutierungseinrichtung (17) zur Stromübertragung auf einen Anker (16) einer elektrischen Maschine, insbesondere eines Startermotors (4) für eine Brennkraftmaschine, bei dem ein Kontaktabschnitt (23) des Kollektors (22) und ein mit einer Ankerwicklung verbundener Verbindungsabschnitt (24) des Kollektors (22) durch Rührreibschweißen unter Einsatz eines Rührreibwerkzeugs (25) im Verbindungsbereich (27) zwischen den Abschnitten (23, 24) miteinander verbunden werden,
wobei der Kontaktabschnitt (23) und der Verbindungsabschnitt (24) aus unterschiedlichen Materialen bestehen,
wobei der Kontaktabschnitt (23) und der Verbindungsabschnitt (24) jeweils rotationssymmetrisch ausgebildet sind und entlang eines kreisförmigen Verbindungsbereichs (27) miteinander verbunden werden und wobei der Kontaktabschnitt (23) und der Verbindungsabschnitt (24) stirnseitig aneinander liegen und die gemeinsame Stirnseite den Verbindungsbereich (27) bildet,
wobei der Kontaktabschnitt (23) und der Verbindungsabschnitt (24) den gleichen Außendurchmesser aufweisen und wobei das Rührreibwerkzeug (25) beim Einsatz sich radial an der Außenseite des Verbindungsbereichs (27) zwischen dem Kontaktabschnitt (23) und den Verbindungsabschnitt (24) befindet.

2. Verfahren nach Anspruch 1, **dadurch gekennzeichnet, dass** das Material des Kontaktabschnitts (23) eine gleich große oder höhere elektrische Leitfähigkeit aufweist als das Material des Verbindungsabschnitts (24).

3. Verfahren nach Anspruch 1 oder 2, **dadurch gekennzeichnet, dass** das Material des Kontaktabschnitts (23) eine größere Dichte aufweist als das Material des Verbindungsabschnitts (24).

4. Verfahren nach einem der Ansprüche 1 bis 3, **dadurch gekennzeichnet, dass** das Material des Kontaktabschnitts (23) eine größere Härte aufweist als das Material des Verbindungsabschnitts (24).

5. Verfahren nach einem der Ansprüche 1 bis 4, **dadurch gekennzeichnet, dass** der Kontaktabschnitt (23) Kupfer oder Messing und der Verbindungsabschnitt (24) Aluminium oder Zink enthält.

6. Verfahren nach einem der Ansprüche 1 bis 5, **dadurch gekennzeichnet, dass** nach dem Verbinden des Kontaktabschnitts (23) und des Verbindungsabschnitts (24) Kollektorlamellen (30) durch axiales Auftrennen erzeugt werden.

7. Verfahren nach Anspruch 6, **dadurch gekennzeichnet, dass** ein Verbund mit einer Mehrzahl von Kollektorlamellen (30) erzeugt wird.

8. Verfahren nach Anspruch 6, **dadurch gekennzeichnet, dass** einzelne Kollektorlamellen (30) durch axiales Auftrennen erzeugt werden.

9. Verfahren nach einem der Ansprüche 6 bis 8, **dadurch gekennzeichnet, dass** nach dem Rührreibschweißen aus den ebenen Abschnitten die Mantelfläche des Kollektors (22) gebildet wird.

10. Elektrische Maschine, insbesondere Startermotor (4) für einen Starter für eine Brennkraftmaschine, mit einer Kommutierungseinrichtung (17) mit einem Kollektor (22), hergestellt nach einem der Ansprüche 1 bis 9.

11. Starter für eine Brennkraftmaschine mit einem elektrischen Startermotor (4) nach Anspruch 10.

## Claims

1. Method for producing a collector (22) for a commutating device (17) for transmitting current to an armature (16) of an electrical machine, in particular a starter motor (4) for an internal combustion engine, in which a contact portion (23) of the collector (22) and a connecting portion (24) of the collector (22) connected to an armature winding are connected to one another by friction stir welding using a friction stir tool (25) in the connecting region (27) between the portions (23, 24),
wherein the contact portion (23) and the connecting portion (24) consist of different materials,
wherein the contact portion (23) and the connecting portion (24) are each formed rotationally symmetrically and are connected to one another along a circular connecting region (27), and wherein the contact portion (23) and the connecting portion (24) abut against one another at the end faces and the common end face forms the connecting region (27),
wherein the contact portion (23) and the connecting portion (24) comprise the same outer diameter, and wherein the friction stir tool (25) in use is located radially outside of the connecting area (27) between the contact portion (23) and the connecting portion (24).

2. Method according to claim 1, **characterized in that** the material of the contact portion (23) comprises an electrical conductivity equal to or higher than the material of the connecting portion (24).

3. Method according to claim 1 or 2, **characterized in that** the material of the contact portion (23) comprises a greater density than the material of the connecting portion (24).

4. Method according to any one of claims 1 to 3, **characterized in that** the material of the contact portion (23) comprises a greater hardness than the material of the connecting portion (24).

5. Method according to any one of claims 1 to 4, **characterized in that** the contact portion (23) comprises copper or brass and the connecting portion (24) comprises aluminium or zinc.

6. Method according to any one of claims 1 to 5, **characterized in that** after connecting the contact section (23) and the connecting section (24) collector ribs (30) are formed by axial separation.

7. Method according to claim 6, **characterized in that** a composite with a plurality of collector ribs (30) is formed.

8. Method according to claim 6, **characterized in that** individual collector ribs (30) are formed by axial separation.

9. Method according to any one of claims 6 to 8, **characterized in that** after friction stir welding, the outer surface of the collector (22) is formed from the flat portions.

10. Electrical machine, in particular a starter motor (4) for a starter for an internal combustion engine, comprising a commutating device (17) with a collector (22), produced according to any one of claims 1 to 9.

11. Starter for an internal combustion engine comprising an electrical starter motor (4) according to claim 10.

## Revendications

1. Procédé de fabrication d'un collecteur (22) pour un dispositif de commutation (17) pour la transmission de courant à un induit (16) d'une machine électrique, en particulier d'un moteur de démarreur (4) pour un moteur à combustion interne, dans lequel une partie de contact (23) du collecteur (22) et une partie d'assemblage (24) du collecteur (22) assemblées à un enroulement d'induit sont assemblées l'une à l'autre par un soudage par friction-malaxage en utilisant un outil de soudage par friction-malaxage (25) dans la zone d'assemblage (27) entre les parties (23, 24), dans lequel la partie de contact (23) et la partie d'assemblage (24) sont constituées de différents matériaux, dans lequel la partie de contact (23) et la partie d'assemblage (24) sont respectivement formées avec une symétrie de rotation et sont assemblées l'une à l'autre le long d'une zone d'assemblage circulaire (27), et dans lequel la partie de contact (23) et la partie d'assemblage (24) sont accolées l'une à l'autre frontalement et la face frontale commune forme la zone d'assemblage (27),
dans lequel la partie de contact (23) et la partie d'assemblage (24) ont le même diamètre extérieur et dans lequel l'outil de soudage par friction-malaxage (25) se trouve, pendant l'utilisation, radialement sur le côté extérieur de la zone d'assemblage (27) entre la partie de contact (23) et la partie d'assemblage (24).

2. Procédé selon la revendication 1, **caractérisé en ce que** le matériau de la partie de contact (23) a une conductivité électrique égale ou supérieure au matériau de la partie d'assemblage (24).

3. Procédé selon la revendication 1 ou 2, **caractérisé en ce que** le matériau de la partie de contact (23) a une densité plus élevée que le matériau de la partie d'assemblage (24).

4. Procédé selon l'une des revendications 1 à 3, **caractérisé en ce que** le matériau de la partie de contact (23) a une dureté plus élevée que le matériau de la partie d'assemblage (24).

5. Procédé selon l'une des revendications 1 à 4, **caractérisé en ce que** la partie de contact (23) contient du cuivre ou du laiton et la partie d'assemblage (24) contient de l'aluminium ou du zinc.

6. Procédé selon l'une des revendications 1 à 5, **caractérisé en ce qu'**après l'assemblage de la partie de contact (23) et de la partie d'assemblage (24), des lamelles de collecteur (30) sont réalisées par séparation axiale.

7. Procédé selon la revendication 6, **caractérisé en ce qu'**un assemblage est réalisé avec une pluralité de lamelles de collecteur (30).

8. Procédé selon la revendication 6, **caractérisé en ce que** des lamelles de collecteur individuelles (30) sont réalisées par séparation axiale.

9. Procédé selon l'une des revendications 6 à 8, **caractérisé en ce qu'**après le soudage par friction-malaxage à partir des parties plates, la surface extérieure du collecteur (22) est formée.

10. Machine électrique, en particulier moteur de démarreur (4) pour un démarreur d'un moteur à combustion interne, comportant un dispositif de commutation (17) avec un collecteur (22), fabriquée selon l'une des revendications 1 à 9.

11. Démarreur pour un moteur à combustion interne comportant un moteur de démarreur électrique (4) selon la revendication 10.
